# EUROPÄISCHE PATENTSCHRIFT

(11) **EP 0 832 552 B1**
(45) Veröffentlichungstag und Bekanntmachung des Hinweises auf die Patenterteilung: **28.03.2001**
(21) Anmeldenummer: 97111390.7
(22) Anmeldetag: 05.07.1997
(51) Int. Cl.: A01F 12/40, F16H 55/28

(54) **Vorrichtung zur Verhinderung des Verkantens von längsverschiebbar angeordneten Maschinenbaugruppen, insbesondere bei Anbauhäckslern von Mähdreschern**
Anti-rack device for longitudinally slidable machine assemblies especially straw choppers of a combine
Dispositif d'anti-fléchissement des assemblages d'une machine montés à déplacement longitudinal en particulier des haches-paille d'une moissonneuse-batteuse

(30) Priorität: 27.09.1996 DE 19639755
(43) Veröffentlichungstag der Anmeldung: 01.04.1998
(73) Patentinhaber: CLAAS KGaA, 33428 Harsewinkel (DE)
(72) Erfinder: Niermann, Martin, 33428 Harsewinkel (DE); Strickmann, Dieter, 48361 Beelen (DE)

(56) Entgegenhaltungen:
- EP-A- 0 224 803
- DE-C- 4 341 764
- US-A- 4 969 853

## Beschreibung

Die Erfindung bezieht sich auf eine Vorrichtung nach dem Gattungsbegriff des Patentanspruchs 1. Aus der EP-A-22 48 03 ist es bekannt, einen Anbauhäcksler für Mähdrescher auf Gleitschienen horizontal verschiebbar zu lagern und die Verschiebung über eine einzige endseitig mit je einem Zahnrad versehene Welle zu bewirken. Montageungenauigkeiten aber auch die beim Antrieb der Welle auftretenden Torsionskräfte bewirken, daß die beiden Zahnräder oft nicht völlig synchron in den zugehörigen Zahnstangen laufen und zu störenden Verkantungen des Häckslers in den Gleitschienen führen, wenn der Häcksler verschoben wird.

Aufgabe der Erfindung ist es, die Nachteile der bekannten Einrichtung unter Beibehaltung von deren Vorteilen zu vermeiden. Die Lösung dieser Aufgabe ist durch den Wortlaut des kennzeichnenden Teils des Patentanspruchs 1 in Verbindung mit der Lehre der Unteransprüche 2 und 3 skizziert.

Anhand der Zeichnungen sei die Erfindung am Beispiel eines Mähdreschers mit längsverschiebbarem Anbau-Strohhäcksler beispielhaft erläutert. Es zeigen:

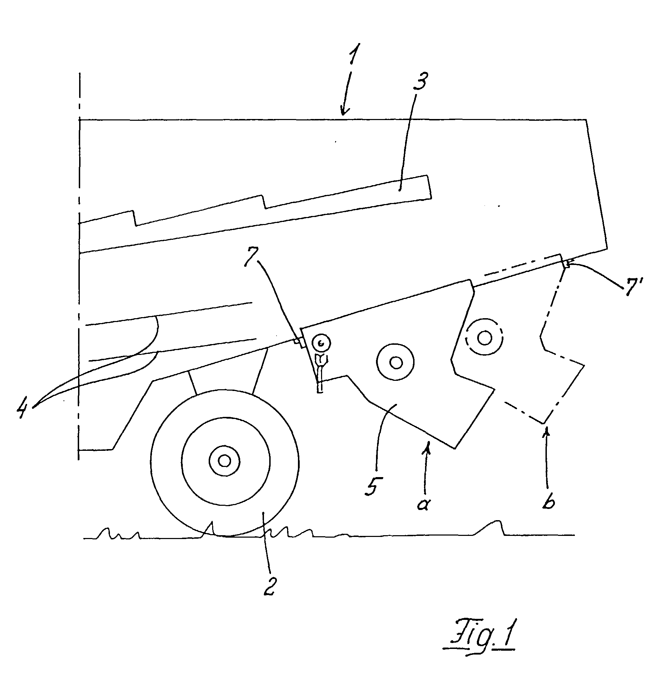

- Figur 1: das abgabseitige Ende eines Mähdreschers mit Anbau-Strohäcksler in Seitenansicht,

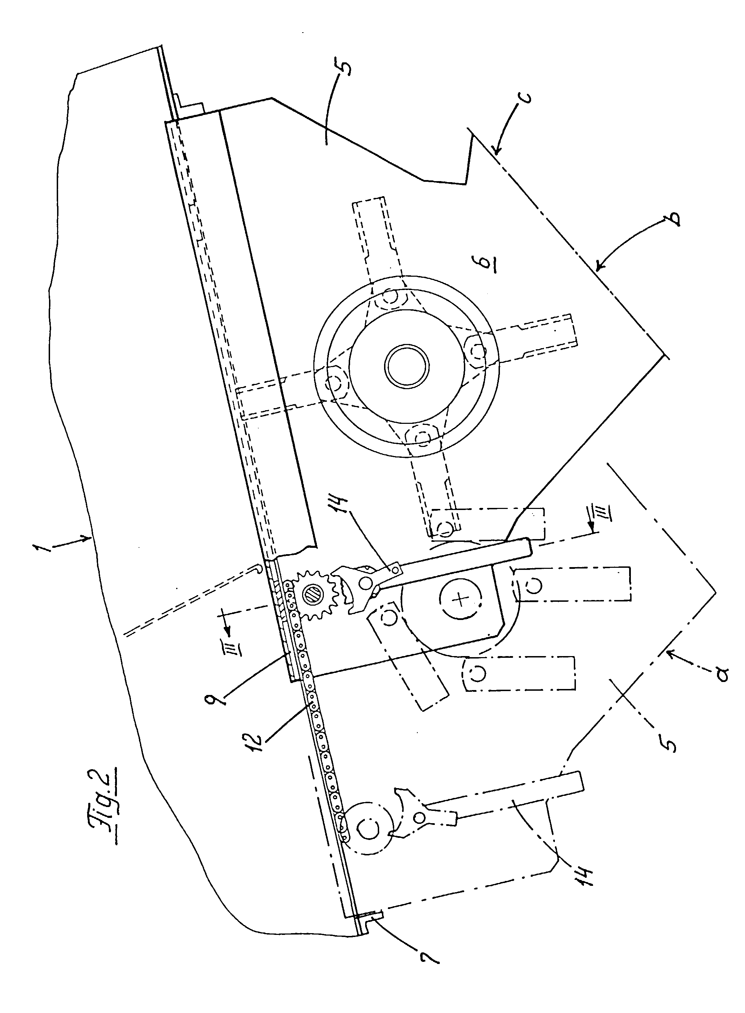

- Figur 2: in Teilseitenansicht und Teilschnitt die Aufhängung des Häckslers am Mähdreschergehäuse und

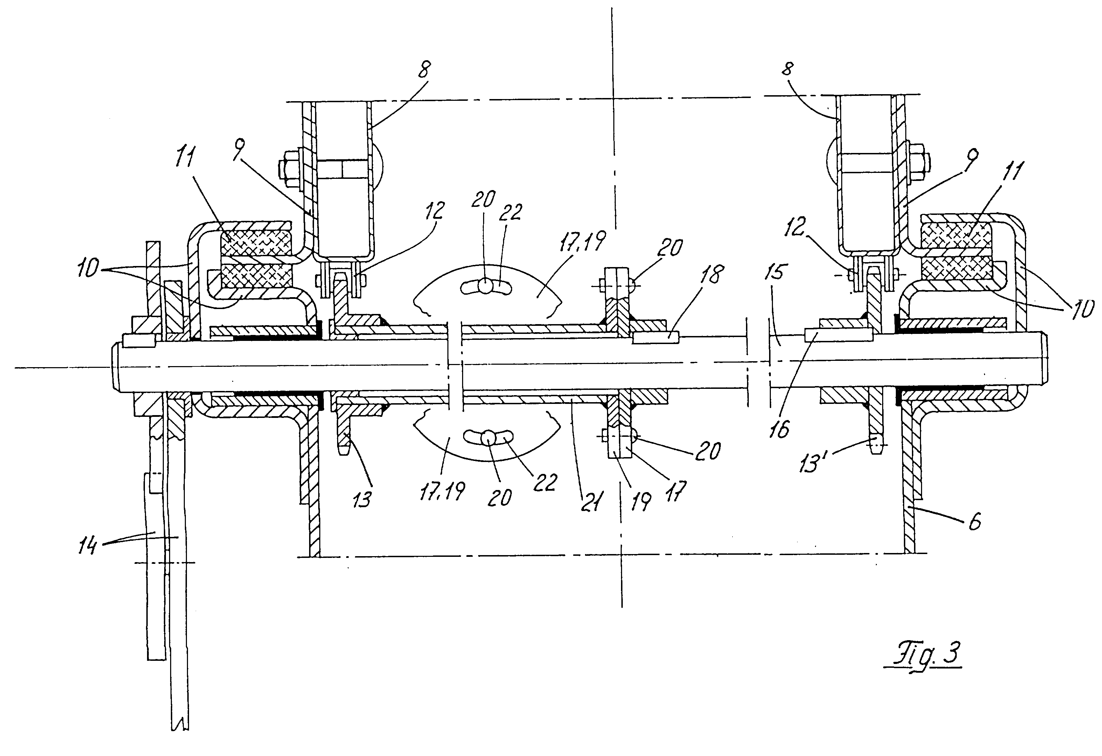

- Figur 3: einen Schnitt entlang der Linie III-III in Figur 2.

Mit ist das hintere Gehäuseteil eines Mähdreschers bezeichnet, der sich auf hinteren Lenkrädern 2 abstützt und in dem Hordenschüttler 3 und Reinigungssiebe 4 angeordnet sind. Mit 5 ist ein Anbau-Strohhäcksler bezeichnet, dessen Seitenwandungen das Bezugszeichen 6 tragen. Der Häcksler 5 ist von der Position a in die gestrichelt dargestellte Position b verschiebbar, so daß das von den Schüttlern 3 abgeworfene Stroh entweder von ihm bearbeitet werden kann oder ungehäckselt bleibt. In seinen äußersten Endpositionen b und c ist er gegen am Mähdreschergehäuse 1 befestigte Anschläge 7, 7' fahrbar. An den Mähdrescher-Rahmenprofilen 8 sind abgewinkelte Gleitleisten 9 befestigt, an denen die Häcksler-Seitenwandungen 6 über Profil-Kröpfungen 10 und Gleitsteine 11 verschiebbar aufgehängt sind. An der Unterseite der Rahmenprofile 8 sind Zahnstangen - oder Kettenabschnitte 12 befestigt, in die beidseitig dem Häcksler 5 zugeordnete Zahnräder 13 eingreifen. Die Zahnräder 13 sind Bestandteil einer zweigeteilten Welle, die in den Häcksler-Seitenwandungen 6 gelagert und über ein an sich bekanntes Klinkenschaltgetriebe 14 drehbar ist. Bei Betätigung des Klinkenschaltgetriebes 14 wird der Häcksler 5 über die Zahnabschnitte 12 und die Zahnräder 13, 13' in Längsrichtung auf den Gleitleisten 9 des Mähdreschers verschoben. Die in den Häcksler-Seitenwandungen 6 gelagerte Welle besteht aus einem durchgehenden Wellenteil 15, das an seinem dem Klinkenschaltgetriebe 14 abgewandten Ende das Zahnrad 13' trägt, welches über den Keil 16 drehfest mit dem Wellenteil 15 verbunden ist. Etwa auf halber Länge des Wellenteils 15 ist ein Ringflansch 17 über einen weiteren Keil 18 drehfest mit dem Wellenteil 15 verbunden. An den Flansch 17 ist ein zweiter Ringflansch 19 über eine Schraubverbindung 20 anschließbar, wobei der Flansch 19 endseitiges Bestandteil einer Hohlwelle 21 ist, die an ihrem dem Klinkenschaltgetriebe 14 benachbarten Ende drehfest mit dem Zahnrad 13 verbunden ist. Die beiden Ringflansche 17 und 19 weisen an ihrem Umfang Radialschlitze 22 auf, die es gestatten, die Flansche um ein bestimmtes Maß gegeneinander zu verdrehen, wenn die Schraubverbindung 20 gelöst wird. Wird der Häcksler 5 gegen die Anschläge 7, 7' gefahren und die Schraubverbindung 20 gelöst bzw. danach wieder geschlossen, können somit Montageungenauigkeiten ausgeglichen und ein Gleichlauf der Zahnräder 13, 13' erreicht werden. Außerdem wirkt sich die Torsion des Wellenteils 15 bei Betätigung durch das Klinkenschaltgetriebe 14 nur noch minimal auf den Gleichlauf der Zahnräder 13, 13' aus.

Die Erfindung ist nicht auf das Ausführungsbeispiel beschränkt sondern kann auch bei vergleichbaren Problemen bei der Verschiebung anderer Baugruppen Anwendung finden.

### Bezugszeichenliste

- 1 -: hinteres Gehäuseteil eines Mähdreschers
- 2 -: - hintere Lenkräder
- 3 -: Hordenschüttler
- 4 -: Reinigungssiebe
- 5 -: Anbau-Strohhäcksler
- 6 -: Häcksler-Seitenwandungen
- a, b -: Häcksler-Positionen
- 7 -: Anschlag
- 8 -: Mähdrescherrahmen-Profile
- 9 -: Gleitleisten am Mähdrescher
- 10 -: Profilkröpfungen
- 11 -: Gleitsteine
- 12 -: Zahnstangen- oder Kettenabschnitte
- 13, 13' -: - Zahnräder
- 14 -: Klinkenschaltgetriebe, handbetätigbar
- 15 -: - durchgehendes Wellenteil
- 16: Keil
- 17 -: Ringflansch
- 18 -: Keil
- 19 -: zweiter Ringflansch
- 20 -: Schraubverbindung
- 21 -: Hohlwelle
- 22 -: Radialschlitze

## Patentansprüche

1. Vorrichtung zur Verhinderung des Verkantens von längsverschiebbar angeordneten Maschinenbaugruppen in deren beidseitig vorgesehenen Führungen, insbesondere für einen Anbauhäcksler (5) für Mähdrescher, der an zwei Gleitleisten (9) des Mähdreschers aufgehängt ist und eine endseitig mit je einem Zahnrad (13, 13') versehene, einseitig angetriebene Antriebswelle (15, 21) zur Horizontalverschiebung des Häckslers (5) aufweist,
**dadurch gekennzeichnet,**
daß jedem der beiden Zahnräder (13, 13') unterschiedlich lange Wellenteile (15, 21) zugeordnet sind, die über eine lösbare Verbindung (17, 19, 20) radial gegeneinander einstellbar sind.

2. Vorrichtung nach Anspruch 1,
**dadurch gekennzeichnet,**
daß das dem Antrieb (14) abgewandte Zahnrad (13') drehfest mit dem Ende eines ersten durchgehenden Wellenteils (15) verbunden ist, während das dem Antrieb (14) zugewandte Zahnrad (13) drehfester Bestandteil einer über das Wellenteil (15) geschobenen Hohlwelle (21) ist, die sich etwa über die halbe Länge des Wellenteils (5) erstreckt und mit diesem lösbar über beidteilig vorgesehene Ringflansche (17, 19) und Schrauben (20) in Drehverbindung steht.

3. Vorrichtung nach den Ansprüchen 1 und 2,
**dadurch gekennzeichnet,**
daß in den Flanschen (17, 19) Verdrehung der Flansche gegeneinander gestattende Radialschlitze (22) für den Durchtritt der Schrauben (20) vorgesehen sind.

## Claims

1. Apparatus for preventing tilting of longitudinally slidably arranged machine units in their guides which are provided on both sides, in particular for a chopper attachment (5) for combine harvesters, which is suspended on two slide bars (9) of the combine harvester and has a drive shaft (15, 21) which is provided at the ends with a respective gear (13, 13') and which is driven at one side, for horizontal displacement of the chopper (5), characterised in that associated with each of the two gears (13, 13') are shaft portions (15, 21) of different lengths, which are adjustable radially relative to each other by way of a releasable connection (17, 19, 20).

2. Apparatus according to claim 1 characterised in that the gear (13') which is remote from the drive (14) is non-rotatably connected to the end of a first continuous shaft portion (15) while the gear (13) which is towards the drive (14) is a non-rotatable component of a hollow shaft (21) which is fitted over the shaft portion (15) and which extends approximately over half the length of the shaft portion (5) and is releasably rotationally connected thereto by way of annular flanges (17, 19) and screws (20) which are provided on both parts.

3. Apparatus according to claims 1 and 2 characterised in that provided in the flanges (17, 19) for the screws (20) to pass therethrough are radial slots (22) which permit rotary movement of the flanges relative to each other.

## Revendications

1. Dispositif pour empêcher le coincement d'éléments de machine montés coulissants dans la direction longitudinale dans deux glissières latérales, en particulier pour un hache-paille porté (5) de moissonneuse-batteuse, qui est supporté par deux rails formant glissières (9) de la moissonneuse-batteuse et comporte un arbre d'entraînement (15, 21) entraîné d'un côté seulement, avec un pignon (13, 13') disposé à chaque extrémité, pour le déplacement horizontal du hache-paille (5), caractérisé en ce qu'à chacun des pignons (13, 13') sont associés des tronçons d'arbre (15, 21) de longueur différente, qui peuvent être réglés l'un par rapport à l'autre, dans la direction radiale, par l'intermédiaire d'une liaison (17, 19, 20) séparable.

2. Dispositif selon la revendication 1, caractérisé en ce que le pignon (13') éloigné de l'entraînement (14) est solidaire en rotation de l'extrémité d'un premier tronçon d'arbre (15) traversant, tandis que le pignon (13) côté entraînement (14) est solidaire en rotation d'un arbre creux (21) enfilé sur le tronçon d'arbre (15), qui s'étend sensiblement sur la moitié de la longueur du tronçon d'arbre (15) et est lié en rotation à celui-ci par des brides annulaires (17, 19) prévues sur les deux éléments et des vis (20).

3. Dispositif selon les revendications 1 et 2, caractérisé en ce qu'il est prévu, dans les brides (17, 19), des fentes radiales (22) pour le passage des vis (20), qui permettent une rotation des brides l'une par rapport à l'autre.
